# EUROPEAN PATENT SPECIFICATION

(11) **EP 2 339 721 B1**
(45) Date of publication and mention of the grant of the patent: **27.01.2021**
(21) Application number: 10252196.0
(22) Date of filing: 22.12.2010
(51) Int. Cl.: H02K 7/00, H02K 7/18, H02K 17/16

(54) **Generator mounted on an internal combustion engine**
Generator befestigt an einer Verbrennungsmaschine
Montage d'un générateur à un moteur à combustion interne

(30) Priority: 22.12.2009 GB 0922478; 22.12.2009 GB 0922479
(43) Date of publication of application: 29.06.2011
(73) Proprietor: EC Power A/S, 8382 Hinnerup (DK)
(72) Inventor: Førster, Jesper, 8240 Risskov (DK)
(74) Representative: Dehns

(56) References cited:
- EP-A1- 1 885 046
- WO-A1-97/08439
- WO-A2-03/061099
- US-A- 5 577 775
- US-A- 5 796 190
- US-A1- 2007 236 098
- US-B1- 6 777 847
- US-B2- 6 849 982

## Description

The invention relates to a generator assembly for an engine-generator, such as, for example, a combined heat and power device powered by an internal combustion engine.

A generator, which uses relative motion of electrical and magnetic components to generate electricity, requires mechanical energy from a prime mover. Typically, a generator will use rotational energy supplied by a prime mover such as an engine or turbine. Mechanical energy from the prime mover is converted into electrical energy by movement of a rotor relative to a stator. With these devices, it is necessary to mount the generator to the prime mover in such a way that the mechanical energy is effectively transferred from the prime mover to the rotor of the generator.

A combined heat and power (CHP) device can be made up of a generator and a prime mover such as an internal combustion engine. The internal combustion engine is fitted with heat exchangers and the like for recovery of heat. A generator is used to convert the mechanical energy produced by the engine into electricity.

In a prior art arrangement, the rotor of the generator is mounted on a shaft with bearings at each end and coupled to the crankshaft of the engine via a clutch. The rotor and stator of the generator can be aligned in a conventional manner with the bearings, and the clutch permits transfer of mechanical energy between the rotor shaft and the crankshaft. However, this arrangement is bulky and mechanically inefficient. In addition, the clutch requires maintenance leading to increased running costs.

An existing improved arrangement omits the clutch and couples the rotor to the crankshaft with no intervening moving parts. A shaft extends out of the generator to join the rotor to the crankshaft. This saves space as well as reducing the number of moving parts. However, because it is not possible to easily align a bearing with the crankshaft, this arrangement has to use a 'flying rotor', i.e. a rotor supported on the crankshaft in cantilever fashion, which leads to problems when aligning the rotor and the crankshaft with the stator. The alignment of the stator and rotor with the crankshaft is crucial. For efficient generation of electricity the air gap between the rotor and the stator should be minimised, and when the nominal air gap has to be increased to allow for possible small misalignments, then the performance of the combined heat and power device will be compromised. Moreover, during high speed rotation of the rotor any misalignment will produce large magnetic forces and centrifugal forces, which will give rise to a bending force on the crankshaft where the rotor is mounted. This can result in potentially catastrophic damage to the device should the rotor and stator come into contact during high speed rotation. Misalignment will also produce vibrations and reduce the efficiency of the CHP device.

To ensure the required degree of alignment the stator casing in the known arrangement utilises a flange that is mounted to the engine prior to mounting the rotor and stator. The flange is mounted using existing mounting points on the engine casing and bolts passing through the flange toward the engine casing. The existing mounting points of the engine would, in other applications, typically be used to mount a clutch and/or gearbox to the engine via a bell housing. The rotor is mounted on the crankshaft and both the rotor and the flange are carefully aligned with the crankshaft and with each other. The stator and the stator casing are then fixed to the flange by means of bolts passing through the flange away from the engine. As the rotor and the flange are aligned with each other and with the crankshaft, the stator can be aligned with the rotor and crankshaft with sufficient accuracy for effective generation of electricity.

Although this known arrangement provides numerous advantages, there are also some problems. Some degree of misalignment can still arise and because the rotor is separated from the mounting point on the crankshaft by the length of the shaft passing through the flange, the effect of any misalignment is magnified. As a consequence of allowing for the possible misalignment the nominal air gap between rotor and stator is larger than the air gap in generators with bearing mounted rotors

Known arrangements are disclosed in US 5796190 A and EP 1885046 A1.

The invention is disclosed in the independent claims 1 and 8. Preferred embodiments are disclosed in the dependent claims.

Viewed from a first aspect, the invention provides a generator assembly for an engine-generator device, the generator assembly comprising: a rotor having a coupling for mounting the rotor to the output shaft of an engine; a stator; and a stator casing, wherein the stator casing comprises a generally cylindrical hollow structure arranged to be mounted directly to the engine casing, wherein the stator casing includes one or more fixing(s) arranged to be coupled with one or more pre-existing mounting point(s) on the engine, whereby the mounting points can be used to align the stator casing with the output shaft, wherein the fixing(s) for mounting the stator casing to the engine are located within the outer circumference of the cylindrical hollow structure adjacent to cut-away portions in the cylindrical hollow structure, and wherein the cut-away portions provide access to the fixing(s) to allow the stator casing to be secured in place once the necessary alignment is completed.

With this arrangement, the flange of the known design is omitted, allowing the rotor-stator assembly to move closer to the engine. The shaft connecting the rotor to the output shaft can be shortened or preferably is omitted, and the distance between the engine and the magnetic field of the generator is reduced. This reduces the effect of the forces on the crankshaft arising from any misalignment are also reduced. Misalignments therefore have a reduced effect and as a consequence the generator runs more smoothly, and the nominal air gap can be reduced, which increases efficiency. The invention arises in part from the realisation that, contrary to the previously held belief in this field, it is possible to directly mount the stator casing to an engine, without the need for a flange to act as a mounting bracket, whilst still achieving the desired alignment of the stator with the rotor.

Preferably the coupling of the rotor is arranged for mounting the rotor directly to the output shaft of the engine, i.e. without any intervening bracket or shaft. One preferred embodiment of the invention takes the form of an engine-generator including the generator assembly, wherein the rotor is preferably directly mounted to the output shaft of the engine of the engine-generator. The output shaft in a preferred arrangement is a crankshaft of an internal combustion engine.

The stator casing has one or more fixings such as holes, bolts, pins or the like, the fixing(s) being placed for connection to the mounting points on the engine. As noted in relation to the known arrangement, engines are typically supplied with mounting points for fixing a clutch or gearbox to the engine via a bell housing. Surprisingly, it has been found that sufficient accuracy of alignment of the rotor and stator can be achieved by mounting the stator casing utilising one or more pre-existing mounting point(s), so that no modification to the engine is required in order to permit the flange of the known engine-generator arrangement to be omitted.

The fixing(s) for mounting the stator casing to the engine are located within the outer circumference of the cylindrical structure adjacent to cut-away portions in the cylindrical structure. Typically, existing mounting points on an engine will be blind holes, and hence bolts or the like being coupled to these mounting points must be inserted into the engine. The use of cut-away portions, such as openings in a cylindrical wall permitting access to the fixing(s) within the wall, allows the stator casing to be mounted to the engine without the need for lugs or suchlike extending outside of the diameter of the main body of the cylindrical structure. Hence, the diameter of the stator casing can be made larger than a diameter formed by mounting points on the engine, and the size of the electrical machine is not restricted.

Preferably, the stator casing comprises a unitary cylindrical structure, which is arranged to be mounted to directly to the engine at one end. This end of the cylindrical structure may comprise a mounting ring having a greater thickness than the wall of the cylindrical structure, and the mounting ring may include fixings as mentioned above. By using a single unitary structure any possible misalignment can be more effectively managed and minimised by ensuring accuracy in the production of this single structure. In addition, the assembly process is simplified as only a single part is used to support the stator.

In one preferred embodiment, the stator comprises asymmetric winding heads. A conventional stator with symmetrical winding heads has the same distance between winding heads at each end of the stator. The use of asymmetric winding heads in the present generator assembly allows the magnetic field to move closer to the engine, reducing the forces applied to the output shaft by magnetic forces on the rotor.

The engine may be an internal combustion engine, and hence the output shaft may be a crankshaft. However, it should be noted that whilst, in the preferred embodiment, the generator assembly discussed above is utilised in conjunction with an internal combustion engine as part of a CHP device, the advantages of the generator assembly are not limited to such applications. Hence the generator assembly can be used in any engine-generator where the rotor can be directly connected to the output shaft of the prime mover.

Viewed from a second aspect, the invention provides a method of manufacturing an engine-generator comprising an engine and a generator assembly, the method comprising: mounting a rotor to an output shaft of the engine; providing a stator and a stator casing; and mounting the stator casing directly to the engine casing; wherein the stator casing is mounted to the engine by coupling one or more fixing(s) on the stator casing to one or more pre-existing mounting point(s) on the engine, in order to thereby align the stator casing with the output shaft, wherein the fixing(s) for mounting the stator casing to the engine are located within the outer circumference of the cylindrical structure adjacent to cut-away portions in the cylindrical structure, and wherein the cut-away portions provide access to the fixing(s) to allow the stator casing to be secured in place once the necessary alignment is completed.

Preferably, the rotor is mounted directly to the output shaft. The stator casing may be mounted to the engine by coupling one or more fixing(s) on the stator casing to one or more pre-existing mounting point(s) on the engine, preferably by coupling at least two fixings to at least two such mounting points, in order to thereby align the stator casing with the output shaft. The generator assembly of the method of this aspect may have features as set out above in relation to the first aspect.

The rotor may comprise: an electrical conductor and the coupling for mounting the rotor on the output shaft of the engine, wherein the coupling is formed from the same material as the electrical conductor.

Known rotors include a separate coupling arrangement formed of a different material. Typically, a rotor may have aluminium or copper conductors about a lamination and a steel shaft fixed to the conductor/lamination arrangement. By forming the coupling from the same material as the electrical conductor the rotor can be manufactured with fewer processing steps and fewer materials. The coupling and the electrical conductor can be machined together, without the need to change tooling to cope with different materials. The inventors have made the realisation that with a flying rotor type arrangement it is possible to make a rotor stiff enough without the use of a separate material for the coupling and/or without a separate shaft made of a different material. If the engine-rotor distance can be reduced by other means, for example by using the generator assembly disclosed herein, then this rotor arrangement is particularly suitable and can aid in further reducing the size and weight of the generator.

Preferably, the coupling and the electrical conductor are integrally formed, and hence the coupling and the electrical conductor may be part of a single unitary body. This arrangement permits simpler manufacturing as the coupling and the conductor can be formed as a single part.

The coupling and/or the electrical conductor may be cast or moulded. This is particularly beneficial when the coupling and the electrical conductor are integrally formed, and hence in a preferred embodiment the coupling and electrical conductor are integrally formed by a casting or moulding process. The coupling and/or the electrical conductor may be machined after the casting or moulding is completed. For example, fixings such as a holes, bolts or pins or the like for mounting the rotor onto the output shaft may be added or finished by machining.

The coupling may comprise a shaft extending through the rotor. However, it is preferred for the coupling to comprise a flange, which may be formed about a hollow through the centre of the rotor. It has been found that sufficient strength and stiffness can be provided by such a flange arrangement, which also readily permits the forming of holes or other fixings, which can be accessed via the hollow. The hollow reduces the weight of the rotor considerably compared to arrangements utilising a shaft formed through the rotor.

Preferably the rotor includes a hole or a boss for complimentary fit with a boss or hole of the output shaft, for aligning the rotor with the output shaft.

The material of the electrical conductor and the coupling may be any suitable material known for use as a conductor for a generator rotor. In a preferred embodiment, the electrical conductor and the coupling are aluminium or an aluminium alloy.

The rotor may comprise electrical conductors located about laminations. The electrical conductors may be cast or moulded about the laminations. Any suitable arrangement for the conductors and the laminations may be used. However, preferably the rotor is a squirrel cage type rotor.

As noted above, the rotor is of particular use when it can be mounted at a reduced distance from the output shaft of the engine. The rotor may be arranged to provide an engine-magnetic field distance of less than 105 mm, preferably less than 80 mm, more preferably 70 mm or less. The engine-magnetic field distance is measured as the distance from the engine bearing to the beginning of the electrical/magnetic part of the rotor, which would usually be the beginning of the laminate of the rotor. With a reduced engine-magnetic field distance the bending force on the rotor arising the magnetic forces during electricity generation are reduced, and hence any misalignment of the rotor and/or stator has a reduced effect, and the nominal air gap between rotor and stator can made smaller, improving the efficiency of the generator.

An additional advantage of the rotor with the above features is that the electrically conductive material used for the coupling will also be a good heat conductor, which allows heat from the rotor to be conducted to the output shaft of the engine. In a combined heat and power device arrangements will be in place to remove heat from the engine, and hence the rotor can be cooled indirectly via the output shaft and the conductive coupling. A conventional rotor will require cooling fins to dissipate heat. However, because heat can be removed via the conductive coupling the rotor of this aspect can omit the cooling fins or at least have cooling fins of reduced size.

Hence, preferably the rotor has cooling fins that are not large enough to keep the rotor cool without the use of additional cooling. That is to say, the cooling fins are smaller than the size required to keep the rotor within acceptable operating temperatures. The cooling fins may for example be less than 15 mm long, preferably less than 10 mm. The rotor may have no cooling fins. Reducing the size of the cooling fins reduces the length of the rotor and thus permits a further reduction in the rotor-engine distance.

The engine may be an internal combustion engine, and hence the output shaft may be a crankshaft. However, it should be noted that whilst, in the preferred embodiment, the rotor discussed above is utilised in conjunction with an internal combustion engine as part of a combined heat and power device, the rotor can be advantageously used in any engine-generator where it can be directly connected to the output shaft of the prime mover.

In a preferred arrangement, a, engine-generator, for example a CHP device includes a generator with the rotor described above and the engine-generator is arranged such that heat is removed from the rotor via conduction of heat from the coupling to the output shaft. Where the engine-generator is a CHP device, waste heat removed from the rotor can advantageously be utilised in the generation of useable heat, for example via heat recovery systems in the engine of the CHP device.

The method of manufacturing the engine generator may include manufacturing the rotor by forming an electrical conductor and forming the coupling for mounting the rotor on the output shaft of the engine, wherein the coupling is formed from the same material as the electrical conductor.

The manufacture of a known rotor using a coupling formed of a different material, such as a shaft made of steel or the like, requires a more complicated manufacturing process. Typically, a pressing step will be used to fit a shaft to the rotor body, followed by an extra machining step. These steps are not necessary with the above method .

Preferably, the coupling and the electrical conductor are formed integrally with each other, and hence the coupling and the electrical conductor may be part of a single unitary body. In a preferred embodiment, the method comprises forming the coupling and the electrical conductor together, in a single manufacturing step. The step(s) of forming the coupling and/or forming the electrical conductor may comprise casting or moulding. The step(s) of forming the coupling and/or forming the electrical conductor may comprise machining. The machining step may include machining a hole or boss for alignment with a corresponding boss or hole on the output shaft. In a preferred method the coupling and/or electrical conductor are cast or moulded and then machined.

A particularly preferred method comprises casting the electrical conductor and the coupling in a single casting step, and machining the cast part. With this method, the coupling and the conductor are made using a single casting step and a single machining step.

The coupling may comprise a shaft extending through the rotor. However, it is preferred for the coupling to comprise a flange, which may be formed about a hollow through the centre of the rotor. The electrical conductor and the coupling may be formed of any suitable material known for use as a conductor for a generator rotor. In a preferred embodiment, the electrical conductor and the coupling are formed of aluminium or an aluminium alloy.

A preferred method comprises forming the electrical conductor about laminations. The laminations may be stamped laminations and the method may include a step of stamping the laminations. Preferably, the laminations are inserted into a mould and electrical conductors are formed about the laminations by casting or moulding. The coupling may be formed in the same casting/moulding step, as discussed above, Any suitable arrangement for the conductors and the laminations may be used. However, preferably the rotor is a squirrel cage type rotor.

It should noted however that the above features of the rotor are not essential for the invention of the first aspect, and that the generator assembly of the first aspect may utilise a rotor with a coupling formed of a separate material, such as a separate steel shaft as in some known generator assembly arrangements.

Certain preferred embodiments of the invention will now be described by way of example only and with reference to the accompanying drawings, in which:
Figure 1 illustrates a combined heat and power (CHP) unit with the generator shown in exploded view;
Figure 2 shows another CHP unit with the generator shown in exploded view;
Figure 3 is an enlarged view of the rotor of Figure 2; and
Figure 4 is a cross-section through a radius of the rotor of Figure 3.

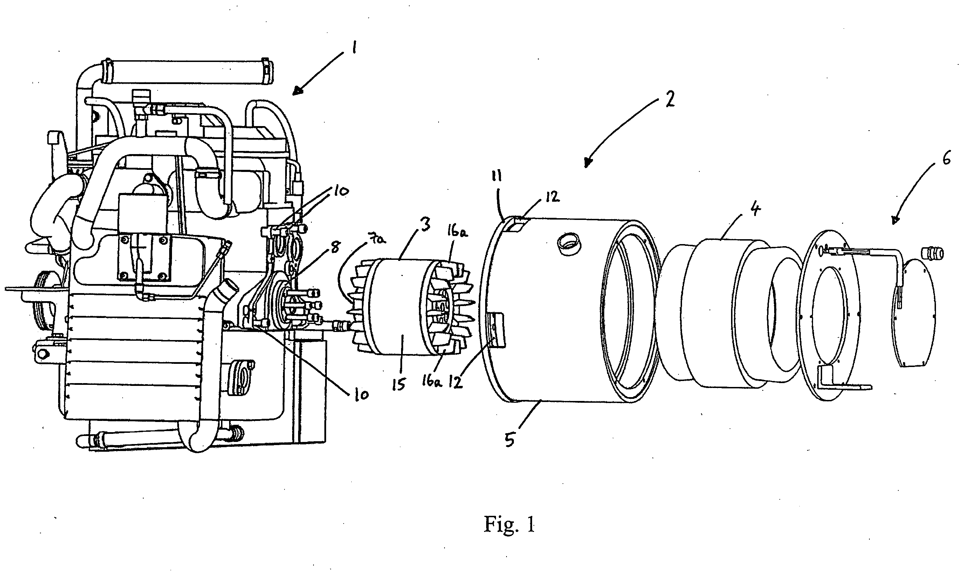

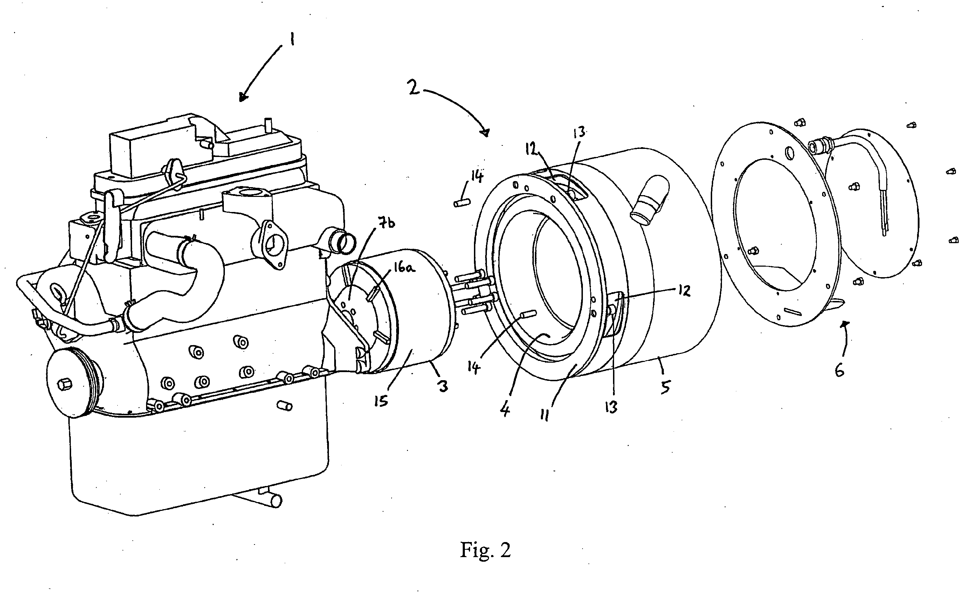

An engine-generator includes an engine or prime mover for producing mechanical energy and a generator for converting the mechanical energy into electrical energy. When the engine-generator is a CHP unit, as shown in Figures 1 and 2, there are additional components that extract heat from the engine.

In Figure 1 the engine 1 is of a known type and includes a known arrangement for extracting heat produced by the engine 1. Figure 2 illustrates a similar engine 1 with the heat transfer parts not shown. Typically, the heat will be used in a space and/or water heating system that includes a heat storage device. The engine 1 and heat transfer arrangements may, for example, be similar to that utilised in the "XRGI 17" combined heat and power unit produced by EC Power AS.

The CHP unit includes a generator assembly 2, comprising a rotor 3, stator 4 and stator casing 5. An endplate arrangement 6, incorporating electrical connections for the stator 4, is fitted over the end of the stator casing 5 that faces away from the engine 1. The rotor 3 has a coupling 7a; 7b for mounting the rotor 3 to a crankshaft 8 of the engine 1. In Figure 1 this coupling 7a takes the form of a shaft extending through the rotor 3, whereas in Figure 2 the coupling 7b is a flange 9 formed about a hollow through the centre of the rotor 3. The features of the rotor 3 are set out in more detail below.

The stator casing 5 is a cylindrical hollow structure including a mounting ring 11 that is provided at the end of the stator casing 5 that faces the engine 1, when in use. The stator casing 5 is arranged to be mounted directly to the casing of the engine 1 using mounting points 10 on the engine 1 and fixings on the mounting ring 11. The fixings are holes in the ring 11, which are located adjacent to cut-away portions 12 in the outer cylindrical wall of the stator casing 5.

By the use of a stator casing 5 that is mounted directly to the engine 1, the length by which the coupling 7a; 7b must extend from the rotor 3 is minimised. The rotor 3 and stator 4 are placed close to the crankshaft 8 and so both the centre of mass of the rotor 3 and the magnetic field within the generator assembly 2 are close to the point where the rotor 3 is joined to the engine 1. Hence, as discussed above, the effect of any misalignment is minimised and the generator has improved performance.

The generator assembly 2 is fitted together as follows. The rotor 3 is mounted onto the crankshaft 8 via the coupling 7a; 7b using bolts or the like. The stator 4 is fitted within the stator casing 5 by a press fit. The stator casing 5 is mounted directly to the casing of the engine 1 using bolts 13 to join the mounting ring 11 to the mounting points 10 on the engine 1. The stator casing 5 is aligned with the engine 1 and hence aligned with the crankshaft 8 and rotor 3 using the bolts 13 or pins 14 located in some of the mounting points 10 on the engine 1. The cut-away portions 12 provide access to the bolts 13 to allow the stator casing 5 to be secured in place once the necessary alignment is completed.

The stator casing 5 can be a casting or it may be a welded construction. As only a single body is used to support the stator 4 on the engine 1, the risk of misalignment is reduced.

The rotor 3 is a squirrel cage type rotor comprising an electrical conductor 15 located about laminations to form the winding of the rotor 3. The rotor includes the coupling 7a; 7b, which, in preferred embodiments, is made of the same material as the electrical conductor 15. Hence, either the shaft coupling 7a of the rotor 3 shown in Figure 1 or the flange coupling 7b of the rotor 3 shown in Figure 2 could be formed with the electrical conductor 15 when it is formed about the laminations. The manufacturing process is discussed below in relation to the rotor 3 of Figure 2. It should be noted however that the features of the generator assembly 2 provide advantages even if the rotor 3 has a coupling made of a different material to the electrical conductor 15. For example, the coupling of the rotor 3 shown in Figure 1 could be a steel shaft extending through the rotor 3. With direct mounting of the stator casing 5 to the engine 1 such a steel shaft can be made shorter, leading to advantages over known generator assemblies.

As noted above, the rotor 3 shown in Figure 1 has a coupling 7a in the form of a shaft extending through the rotor 3, and this differs from the coupling 7b of the rotor 3 shown in Figure 2. The rotor 3 of Figure 1 also differs in other respects from the rotor 3 of Figure 2, as it incorporates cooling fins 16a of conventional size in place of the cooling fins 16b of the rotor of Figure 2, which are significantly smaller. The rotor 3 of Figure 2 is the more preferred embodiment of a rotor 3 and will be described in more detail below.

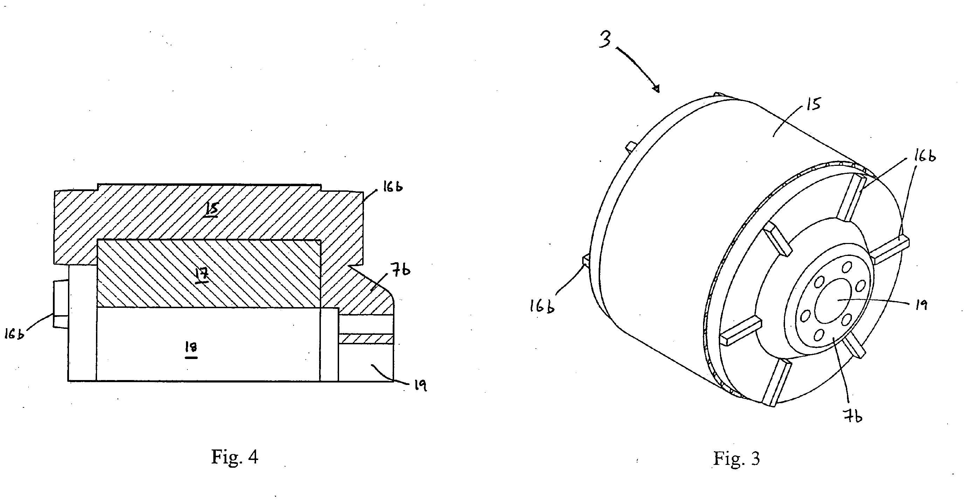

Figure 3 shows an enlarged view of the rotor 3 of Figure 2 in which the coupling 7b can be seen in more detail. The small cooling fins 16b can also be seen. As discussed above, because heat produced by the generator is conducted away through the coupling 7b to the crankshaft 8, the size of the cooling fins 16b can be reduced, allowing the engine-magnetic field distance to be reduced. The effect of this can be readily seen by comparison of the size of the cooling fins 16a in Figure 1 and the cooling fins 16b in Figures 2, 3 and 4. The cooling fins 16a in Figure 1 are of generally conventional size, and would be able to dissipate sufficient heat to allow the rotor 3 of Figure 1 to perform satisfactorily without heat removal via conduction of heat through the coupling 7a; 7b and crankshaft 8. They increase the size of the rotor 3 considerably compared to the cooling fins 16b used with the rotor 3 of Figures 2, 3 and 4.

Figure 4 is a cross-section through a radius of the rotor 3 of Figure 3, cutting through one of the bars of the electrical conductor 15 in the squirrel cage arrangement. The central portion 17 of the stack of laminated rings of the rotor 3 can be seen in the cross-section. The laminated rings and the portion of the electrical conductor 15 that surrounds the laminations may have a generally conventional arrangement. The coupling 7b is a flange extending inwardly over a hollow 18 through the centre of the rotor 3 and centred on a circular opening 19, which is used to align the rotor 3 with a circular boss on the crankshaft 8. The holes in the flange are used to join the rotor 3 to corresponding fixing points on the crankshaft 8 using bolts. The bolts can be tightened by a tool passing through the hollow 18.

The rotor 3 is manufactured as follows. First, laminations are stamped and a stack of laminations is inserted into a mould. Then, the electrical conductor 15 and the coupling 7a; 7b are cast around the laminations in a single pour of a casting material such as aluminium or an aluminium alloy. The casting step forms the shaft for a coupling 7a of the type shown in Figure 1, or the flange for a coupling 7b of the type shown in Figures 2, 3 and 4. The coupling is formed during the casting step at the same time as forming the bars of the electrical conductor 15 in the squirrel cage arrangement. The holes used for fixing the coupling 7a; 7b to the crankshaft 8 are also formed during casting. The cast rotor 3 is then machined. Machining is carried out about the outer circumference of the rotor 3 to finish the bars and laminated rings of the rotor 3, and the coupling 7a; 7b is also machined to finish the fixings for the bolts and the opening 19 that fits to the boss on the crankshaft 8.

## Claims

1. A generator assembly for an engine-generator device, the generator assembly comprising: a rotor (3) having a coupling (7a; 7b) for mounting the rotor to the output shaft (8) of an engine (1); a stator (4); and a stator casing (5), wherein the stator casing comprises a generally cylindrical hollow structure arranged to be mounted directly to the engine casing,
wherein the stator casing includes one or more fixing(s) (13) arranged to be coupled with one or more pre-existing mounting point(s) (10) on the engine, wherein the fixing(s) for mounting the stator casing to the engine are located within the outer circumference of the cylindrical hollow structure adjacent to cut-away portions (12) in the cylindrical hollow structure, **characterized in that** the cut-away portions (12) provide access to the fixing(s) (13) to allow the stator casing to be secured in place once the necessary alignment is completed.

2. A generator assembly as claimed in claim 1, wherein the stator casing (5) comprises a unitary cylindrical structure, which is arranged to be mounted directly to the engine (1) at one end of the cylinder.

3. A generator assembly as claimed in claim 2, wherein the end of the cylindrical structure comprises a mounting ring (11) having a greater thickness than the wall of the cylindrical structure.

4. A generator assembly as claimed in any preceding claim, wherein the stator (4) comprises asymmetric winding heads.

5. A generator assembly as claimed in any preceding claim, wherein the rotor (3) comprises an electrical conductor and the coupling (7a; 7b) is formed from the same material as the electrical conductor.

6. An engine-generator comprising a generator assembly as claimed in any preceding claim.

7. An engine-generator as claimed in claim 6, wherein the engine (1) is an internal combustion engine.

8. A method of manufacturing an engine-generator comprising an engine (1) and a generator assembly (2), the method comprising: mounting a rotor (3) to an output shaft (8) of the engine (1); providing a stator (4) and a stator casing (5); and mounting the stator casing directly to the engine casing; wherein the stator casing is mounted to the engine by coupling one or more fixing(s) (13) on the stator casing to one or more pre-existing mounting point(s) (10) on the engine, wherein the fixing(s) for mounting the stator casing to the engine are located within the outer circumference of the cylindrical structure adjacent to cut-away portions (12) in the cylindrical structure, **characterized in that** the cut-away portions (12) provide access to the fixing(s) (13) to allow the stator casing to be secured in place once the necessary alignment is completed.

9. A method as claimed in claim 8, wherein the rotor (3) is mounted directly to the output shaft (8).

10. A method as claimed in claim 8 or 9, comprising manufacturing the rotor (3) by forming an electrical conductor and forming a coupling (7a; 7b) for mounting the rotor on an output shaft (8) of an engine (1), wherein the coupling is formed from the same material as the electrical conductor.

11. A method as claimed in any of claims 8 to 10, wherein the generator assembly is as claimed in any of claims 1 to 5.

## Patentansprüche

1. Generatorbaugruppe für eine Motorgeneratorvorrichtung, die Generatorbaugruppe umfassend: einen Rotor (3) mit einer Kopplung (7a; 7b) zum Montieren des Rotors an der Abtriebswelle (8) eines Motors (1), einen Stator (4); und ein Statorgehäuse (5), wobei das Statorgehäuse eine im Allgemeinen zylindrische hohle Struktur umfasst, die angeordnet ist, direkt an dem Motorgehäuse montiert zu werden,
wobei das Statorgehäuse eine oder mehrere Befestigungseinrichtung(en) (13) beinhaltet, die angeordnet sind, mit einem oder mehreren bereits bestehenden Montagepunkt(en) (10) an dem Motor gekoppelt zu werden,
wobei die Befestigungseinrichtung(en) zur Montage des Statorgehäuses an dem Motor innerhalb des Außenumfangs der zylindrischen hohlen Struktur neben ausgeschnittenen Abschnitten (12) in der zylindrischen hohlen Struktur liegen, **dadurch gekennzeichnet, dass**
die ausgeschnittenen Abschnitte (12) Zugang zu der (den) Befestigungseinrichtung(en) (13) bereitstellen, um eine Befestigung des Statorgehäuses vor Ort zu erlauben, sobald die erforderliche Ausrichtung beendet ist.

2. Generatorbaugruppe nach Anspruch 1, wobei das Statorgehäuse (5) eine einheitliche zylindrische Struktur umfasst, die angeordnet ist, direkt an dem Motor (1) an einem Ende des Zylinders montiert zu werden.

3. Generatorbaugruppe nach Anspruch 2, wobei das Ende der zylindrischen Struktur einen Montagering (11) mit einer größeren Dicke als die Wand der zylindrischen Struktur umfasst.

4. Generatorbaugruppe nach einem vorstehenden Anspruch, wobei der Stator (4) asymmetrische Wicklungsköpfe umfasst.

5. Generatorbaugruppe nach einem vorstehenden Anspruch, wobei der Rotor (3) einen elektrischen Leiter umfasst und die Kopplung (7a; 7b) aus demselben Material wie der elektrische Leiter gebildet ist.

6. Motorgenerator, umfassend eine Generatorbaugruppe nach einem vorstehenden Anspruch.

7. Motorgenerator nach Anspruch 6, wobei der Motor (1) ein Verbrennungsmotor ist.

8. Verfahren zur Herstellung eines Motorgenerators, umfassend einen Motor (1) und eine Generatorbaugruppe (2), das Verfahren umfassend: Montieren eines Rotors (3) an einer Abtriebswelle (8) des Motors (1); Bereitstellen eines Stators (4); und eines Statorgehäuses (5); und Montieren des Statorgehäuses direkt an dem Motorgehäuse; wobei das Statorgehäuse an dem Motor durch Koppeln einer oder mehrerer Befestigungseinrichtung(en) (13) an dem Statorgehäuse mit einem oder mehreren bereits bestehenden Montagepunkt(en) (10) an dem Motor montiert wird, wobei die Befestigungseinrichtung(en) zur Montage des Statorgehäuses an dem Motor innerhalb des Außenumfangs der zylindrischen hohlen Struktur neben ausgeschnittenen Abschnitten (12) in der zylindrischen hohlen Struktur liegen, **dadurch gekennzeichnet, dass**
die ausgeschnittenen Abschnitte (12) Zugang zu der (den) Befestigungseinrichtung(en) (13) bereitstellen, um eine Befestigung des Statorgehäuses vor Ort zu erlauben, sobald die erforderliche Ausrichtung beendet ist.

9. Verfahren nach Anspruch 8, wobei der Rotor (3) direkt an der Abtriebswelle (8) montiert ist.

10. Verfahren nach Anspruch 8 oder 9, umfassend Herstellen des Rotors (3) durch Bilden eines elektrischen Leiters und Bilden einer Kopplung (7a; 7b) zur Montage des Rotors an der Abtriebswelle (8) eines Motors (1), wobei die Kopplung aus demselben Material wie der elektrische Leiter gebildet ist.

11. Verfahren nach einem der Ansprüche 8 bis 10, wobei die Generatorbaugruppe wie in einem der Ansprüche 1 bis 5 beansprucht ist.

## Revendications

1. Ensemble générateur pour un dispositif moteur-générateur, l'ensemble générateur comprenant : un rotor (3) ayant un couplage (7a ; 7b) pour monter le rotor sur l'arbre de sortie (8) d'un moteur (1) ; un stator (4) ; et un carter de stator (5), dans lequel le carter de stator comprend une structure creuse globalement cylindrique agencée pour être montée directement sur le carter de moteur,
dans lequel le carter de stator inclut une ou plusieurs fixations (13) agencées pour être couplées à un ou plusieurs points de montage préexistants (10) sur le moteur,
dans lequel la/les fixation(s) pour monter le carter de stator sur le moteur est/sont située(s) au sein de la circonférence externe de la structure creuse cylindrique adjacente à des portions découpées (12) dans la structure creuse cylindrique,
**caractérisé en ce que** les portions découpées (12) fournissent un accès à la/aux fixation(s) (13) pour permettre au carter de stator d'être maintenu en place une fois que l'alignement nécessaire est achevé.

2. Ensemble générateur selon la revendication 1, dans lequel le carter de stator (5) comprend une structure cylindrique unitaire, qui est agencée pour être montée directement sur le moteur (1) au niveau d'une extrémité du cylindre.

3. Ensemble générateur selon la revendication 2, dans lequel l'extrémité de la structure cylindrique comprend une bague de montage (11) ayant une épaisseur supérieure à la paroi de la structure cylindrique.

4. Ensemble générateur selon l'une quelconque des revendications précédentes, dans lequel le stator (4) comprend des têtes d'enroulement asymétriques.

5. Ensemble générateur selon l'une quelconque des revendications précédentes, dans lequel le rotor (3) comprend un conducteur électrique et le couplage (7a ; 7b) est formé à partir du même matériau que le conducteur électrique.

6. Moteur-générateur comprenant un ensemble générateur selon l'une quelconque des revendications précédentes.

7. Moteur-générateur selon la revendication 6, dans lequel le moteur (1) est un moteur à combustion interne.

8. Procédé de fabrication d'un moteur-générateur comprenant un moteur (1) et un ensemble générateur (2), le procédé comprenant : le montage d'un rotor (3) sur un arbre de sortie (8) du moteur (1) ; la fourniture d'un stator (4) et d'un carter de stator (5) ; et le montage du carter de stator directement sur le carter de moteur ; dans lequel le carter de stator est monté sur le moteur en couplant une ou plusieurs fixations (13) sur le carter de stator à un ou plusieurs points de montage préexistants (10) sur le moteur, dans lequel la/les fixations pour monter le carter de stator sur le moteur est/sont située(s) au sein de la circonférence externe de la structure cylindrique adjacente à des portions découpées (12) dans la structure cylindrique,
**caractérisé en ce que** les portions découpées (12) fournissent un accès à la/aux fixation(s) (13) pour permettre au carter de stator d'être maintenu en place une fois que l'alignement nécessaire est achevé.

9. Procédé selon la revendication 8, dans lequel le rotor (3) est monté directement sur l'arbre de sortie (8).

10. Procédé selon la revendication 8 ou 9, comprenant la fabrication du rotor (3) en formant un conducteur électrique et en formant un couplage (7a ; 7b) pour monter le rotor sur un arbre de sortie (8) d'un moteur (1), dans lequel le couplage est formé à partir du même matériau que le conducteur électrique.

11. Procédé selon l'une quelconque des revendications 8 à 10, dans lequel l'ensemble générateur est selon l'une quelconque des revendications 1 à 5.
